# EUROPÄISCHE PATENTSCHRIFT

(11) **EP 1 663 704 B1**
(45) Veröffentlichungstag und Bekanntmachung des Hinweises auf die Patenterteilung: **12.10.2011**
(21) Anmeldenummer: 04786180.2
(22) Anmeldetag: 25.08.2004
(51) Int. Cl.: B60N 2/66, A47C 7/46

(54) **RÜCKENLEHNENSTRUKTUR FÜR EINEN KRAFTFAHRZEUGSITZ**
MOTOR VEHICLE SEAT BACK STRUCTURE
STRUCTURE DE DOSSIER POUR SIEGE DE VEHICULE A MOTEUR

(30) Priorität: 04.09.2003 DE 20313925 U
(43) Veröffentlichungstag der Anmeldung: 07.06.2006
(73) Patentinhaber: Brose Fahrzeugteile GmbH & Co. KG, Coburg, 96450 Coburg (DE)
(72) Erfinder: FISCHER, Markus, 96274 Itzgrund (DE); HOFFMANN, Matthias, 96145 Sesslach (DE); BAUERSACHS, Andrea, 96237 Ebersdorf (DE); FORKEL, Michael, 96450 Coburg (DE); HOFMANN, Jochen, 96257 Marktgraitz (DE); MACHT, Alwin, 96250 Ebensfeld (DE); SCHECK, Georg, 96479 Weitramsdorf (DE)
(74) Vertreter: Baumgärtel, Gunnar
(86) Internationale Anmeldenummer: PCT/DE2004/001896
(87) Internationale Veröffentlichungsnummer: WO 2005/023585

(56) Entgegenhaltungen:
- EP-A- 0 458 440
- EP-B- 1 082 233
- US-A- 4 541 670
- US-A- 5 718 476
- PATENT ABSTRACTS OF JAPAN Bd. 1995, Nr. 01, 28. Februar 1995 (1995-02-28) -& JP 06 278511 A (IKEDA BUSSAN CO LTD), 4. Oktober 1994 (1994-10-04)
- PATENT ABSTRACTS OF JAPAN Bd. 008, Nr. 005 (M-267), 11. Januar 1984 (1984-01-11) & JP 58 170638 A (TACHIKAWA SPRING KK), 7. Oktober 1983 (1983-10-07)

## Beschreibung

Die Erfindung betrifft eine Rückenlehnenstruktur für einen Kraftfahrzeugsitz nach dem Oberbegriff des Anspruchs 1.

Eine derartige Rückenlehnenstruktur umfasst ein Lehnengestell, welches eine dem Rücken des Sitzbenutzers zugewandte Vorderseite aufweist, entlang der sich die Wirbelsäule des Sitzbenutzers bei bestimmungsgemäßem Gebrauch des Sitzes in Lehnenlängsrichtung erstreckt; eine an der Vorderseite des Lehnengestells angeordnete Lordosenstütze zum Abstützen des Rückens eines Sitzbenutzers; sowie eine Verstelleinrichtung zur Einstellung der Lage der Lordosenstütze senkrecht zur Erstreckungsebene des Lehnengestells, um die Wölbung eines Lehnenpolsters zu verstellen, das vor dem Lehnengestell und der Lordosenstütze angeordnet ist und über das sich der Rücken eines Fahrzeuginsassen an der Lordosenstütze abstützt.

Aus der dem Oberbegriff entsprechenden JP 6 278511 A ist eine Rückenlehnenstruktur mit einer Lordosenstütze zum Abstützen des Rückens eines Sitzbenutzers bekannt, wobei die Lordosenstütze aus drei Verstellbereichen besteht und an einem mittleren Verstellbereich ein keilförmiger Gleiter angeordnet ist.

Weitere Rückenlehnenstrukturen für Kraftfahrzeugsitze mit Lordosenstützen sind aus den Dokumenten EP 0 458 440 A1, US 4 541 670 A, US 5 718 476 A und JP 58 170638 A bekannt.

Der Erfindung liegt das Problem zugrunde, eine Rückenlehnenstruktur der eingangs genannten Art hinsichtlich des erforderlichen Bauraumes zu verbessern, und zwar insbesondere hinsichtlich des benötigten Bauraumes in Verstellrichtung der Lordosenstütze, d.h. entlang einer Richtung im Wesentlichen senkrecht zur Erstreckungsebene des Lehnengestells.

Dieses Problem wird erfindungsgemäß durch die Schaffung einer Rückenlehnenstruktur mit den Merkmalen des Anspruchs 1 gelöst.

Danach umfasst die Verstelleinrichtung zwei mit der Lordosenstütze in Wirkverbindung stehende, schwenkbar gelagerte Verstellelemente und zwei bezüglich des Verstellelementes (durch Verschieben) bewegbare Gleiter, die über eine Rampe nach dem Keilprinzip derart zusammenwirken, dass bei einer Bewegung der Gleiter das jeweilige Verstellelement mit einer Komponente senkrecht zur Bewegungsrichtung der Gleiter verstellt wird.

Die erfindungsgemäße Lösung beruht auf der Erkenntnis, dass ein flacher Aufbau der Verstelleinrichtung der Lordosenstütze dadurch erreicht werden kann, wenn zur Einstellung der Lage der Lordosenstütze senkrecht zur Erstreckungsebene des Lehnengestells Gleiter verwendet werden, die sich im Wesentlichen entlang der Erstreckungsebene des Lehnengestells oder leicht schräg hierzu bewegen und hierbei über eine Rampe so mit einem Verstellelement zusammenwirken, so dass dessen Lage (zusammen mit der Lordosenstütze selbst) quer zur Bewegungsrichtung der Gleiter verstellt wird.

Gemäß einer bevorzugten Ausführungsform der Erfindung ist die Rampe, über die der Gleiter und das Verstellelement der Lordosenstütze zusammenwirken, gekrümmt ausgebildet, so dass die Steigung der Rampe variiert (im Gegensatz zu einer Rampe mit einer ebenen Oberfläche konstanter Steigung). Hierdurch lässt sich die jeweilige Übersetzung einer Verschiebebewegung des Gleiters in eine Verstellbewegung des Verstellelementes quer zur Verschieberichtung gezielt ortsabhängig (bezogen auf die Position des Gleiters) einstellen.

Die Verschiebebewegung der Gleiter kann insbesondere in Lehnenlängsrichtung (entsprechend der Erstreckungsrichtung der Wirbelsäule eines Sitzbenutzers bei bestimmungsgemäßem Gebrauch des Kraftfahrzeugsitzes) oder senkrecht zur Lehnenlängsrichtung, jedoch ebenfalls mit einer Komponente parallel zur Erstreckungsebene des Lehnengestells, erfolgen.

Die entsprechende Bewegung der Gleiter entlang einer Richtung mit zumindest einer Komponente parallel zur Erstreckungsebene des Lehnengestells wird dabei durch die Rampe umgesetzt in die gewünschte Verstellbewegung der Lordosenstütze quer zur Erstreckungsebene des Lehnengestells. Für eine definierte Bewegung durch Verschieben ist den Gleitern dabei jeweils eine Führungsschiene zugeordnet, entlang derer diese geführt werden.

Zur Erzeugung der für die Bewegung der Gleiter erforderlichen Verstellkraft dient ein Antrieb, insbesondere in Form eines Spindelantriebs oder eines Hebelantriebs, welcher zur Erzeugung mechanischer Energie bevorzugt einen Antriebsmotor aufweist. Zur Verbindung des Antriebsmotors mit dem entsprechenden Spindel- bzw. Hebelgetriebe kann dabei mindestens eine flexible Welle dienen, so dass zur Anpassung an die Platzverhältnisse im jeweiligen Einzelfall eine unterschiedliche Anordnung des Antriebsmotors bezüglich des jeweiligen Getriebes des Verstellantriebs ermöglicht wird.

Wenn für eine symmetrische Einleitung der Verstellkräfte in das mindestens eine dem Lordosenträger zugeordnete Verstellelement eine Mehrzahl an Gleitern, insbesondere zwei Gleiter vorgesehen sind, die jeweils durch Verschieben auf das oder die Verstellelement(e) einwirken, dann wird bevorzugt ein einzelner Antriebsmotor zur Betätigung beider Gleiter verwendet.

Hierbei kann einerseits vorgesehen sein, dass die beiden Gleiter gegenläufig zueinander bewegt werden, und zwar insbesondere quer zur Lehnenlängsrichtung. Die simultane, gegenläufige Bewegung zweier Gleiter zur Einwirkung auf das oder die Verstellelement(e) lässt sich beispielsweise mit einer Spindel erreichen, die zwei Gewindeabschnitte mit entgegengesetzter Gewindesteigung, also einen Abschnitt mit einem sogenannten linkssteigenden Gewinde und einen Abschnitt mit einem sogenannten rechtssteigenden Gewinde aufweist, wobei mittels jedes der beiden Spindelabschnitte einer der beiden Gleiter bewegt wird, so dass bei einer Drehbewegung der Spindel entlang einer definierten Richtung, die beiden Gleiter (entsprechend der gegenläufigen Steigung der beiden Gewindeabschnitte) in entgegengesetzter Richtung bewegt werden.

Gemäß einer anderen Ausführungsform der Erfindung sind zwei Gleiter quer zur Lehnenlängsrichtung voneinander beabstandet angeordnet und werden zur Erzeugung einer Verstellbewegung parallel zueinander entlang der Lehnenlängsrichtung verschoben.

Die rampenartige, vorzugsweise gekrümmte Oberfläche, über die die Gleiter mit dem oder den Verstellelement(en) zusammenwirkt, ist bevorzugt an dem jeweiligen, beispielsweise als Trägerbügel ausgebildeten Verstellelement vorgesehen.

Gemäß einer bevorzugten Weiterbildung der Erfindung ist zwischen den Gleitern und dem zugeordneten Verstellelement jeweils ein rotationssymmetrisches Element, insbesondere in Form eines Rollkörpers, angeordnet, welches bei einer Bewegung der Gleiter relativ zu dem Verstellelement entlang einer schräg zur Bewegungsrichtung der Gleiter verlaufenden Oberfläche abrollt. Hierdurch wird eine vergrößerte Übersetzung bei der Umsetzung der Bewegung des jeweiligen Gleiters in eine Verstellbewegung des zugeordneten Verstellelementes erreicht. Dies kann zu einer weiteren Reduzierung der Bauhöhe der Verstelleinrichtung genutzt werden. Ferner wird die Reibung reduziert, die beim Zusammenwirken des jeweiligen Gleiters mit einem Verstellelement auftritt, da der Gleiter und das Verstellelement nicht mehr unmittelbar, sondern über ein rotationssymmetrisches Element zusammenwirken.

Für eine definierte Mitnahme des rotationssymmetrischen Elementes bei einer Bewegung der Gleiter kann dieses über eine Außenverzahnung mit einer entsprechenden Verzahnung der zugeordneten Schrägfläche des Gleiter zusammenwirken. Alternativ kann das rotationssymmetrische Element beispielsweise mittels einer Hebelanordnung geführt werden.

Weitere Merkmale und Vorteile der Erfindung werden bei der nachfolgenden Beschreibung von Ausführungsbeispielen anhand der Figuren deutlich werden.

Es zeigen:
- Fig. 1a und 1 b: zwei perspektivische Ansichten einer Verstelleinrichtung zur Einstellung der Lage einer Lordosenstütze für eine Rückenlehne eines Kraftfahrzeugsitzes;
- Fig. 2: die Verstelleinrichtung aus den Figuren 1a und 1b eingebaut in ein Lehnengestell einer Rückenlehne;
- Fig. 3a: das Lehnengestell aus Figur 2 mit einer zusätzlichen Lordosenstütze in Vorderansicht;
- Fig. 3b: eine Darstellung des Lehnengestells gemäß Figur 3b, wobei die Lordosenstütze durchscheinend dargestellt ist;
- Fig. 3c: eine Rückansicht des Lehnengestells aus den Figuren 3a und 3b;
- Fig. 4: eine Abwandlung der Verstelleinrichtung aus den Figuren 1a und 1b;
- Fig. 5: die Verstelleinrichtung aus Figur 4, eingebaut in ein Lehnengestell;
- Fig. 6: eine schematische Darstellung einer Weiterbildung der Verstelleinrichtung aus den Figuren 4 und 5;
- Fig. 7a und 7b: schematische Darstellungen zweier Weiterbildungen der Verstelleinrichtungen aus den Figuren 1a und 1b bzw. aus Figur 4.

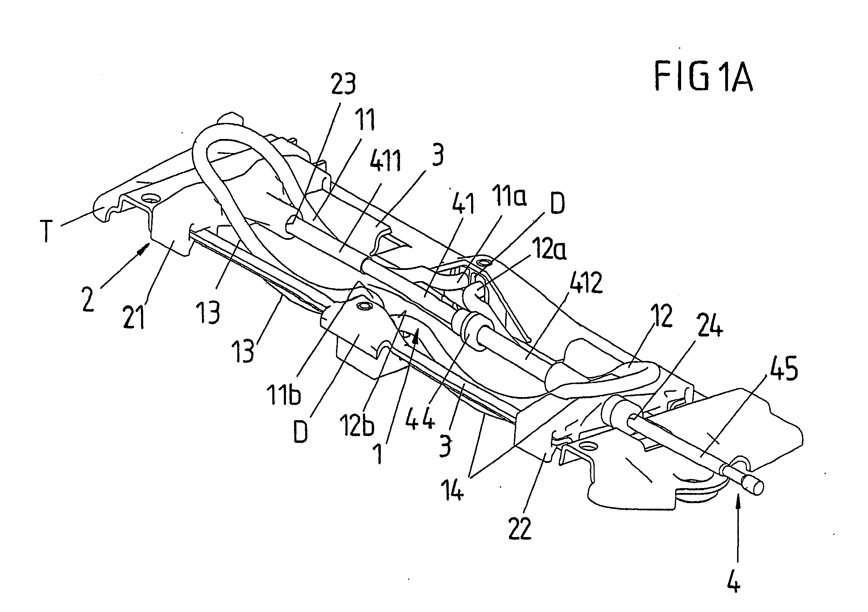

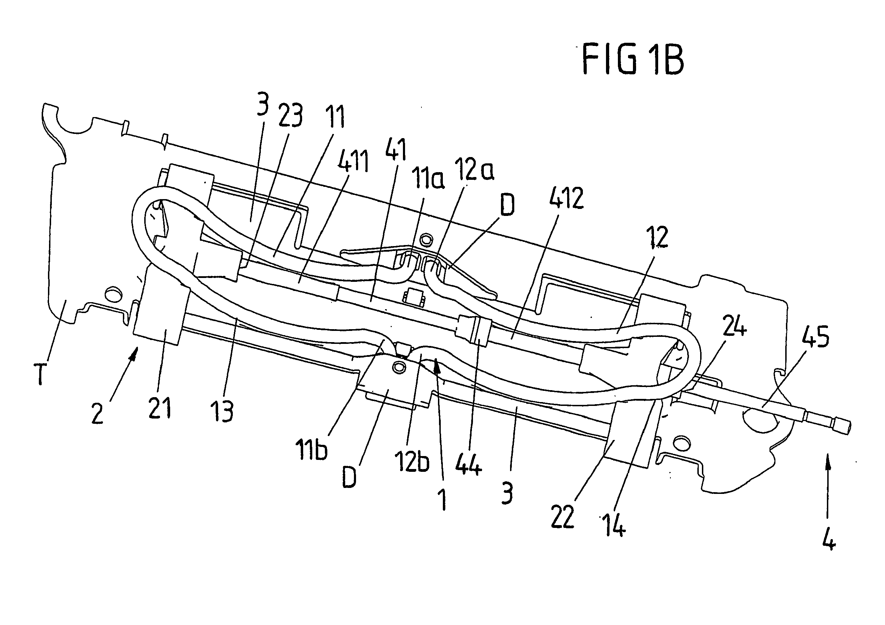

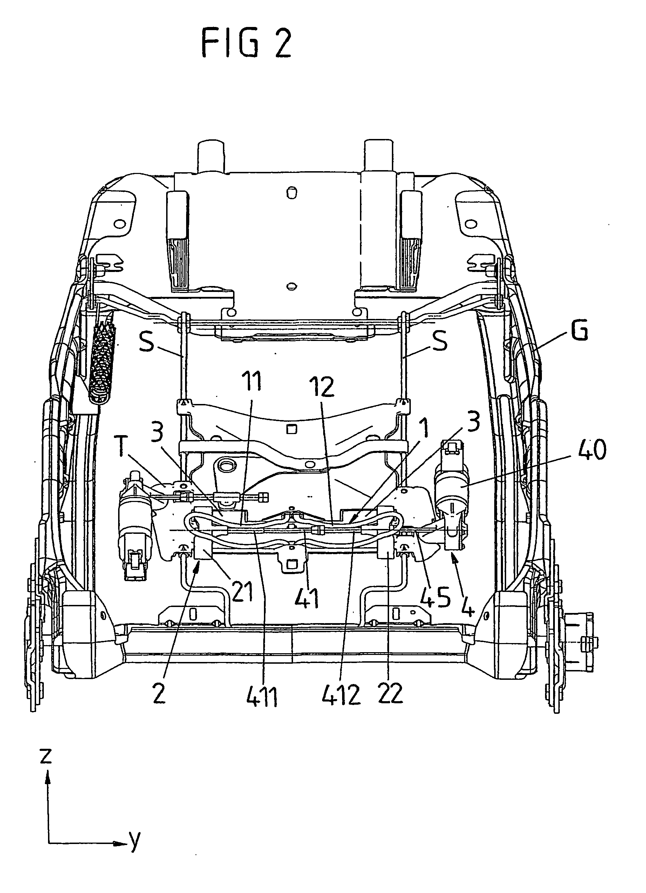

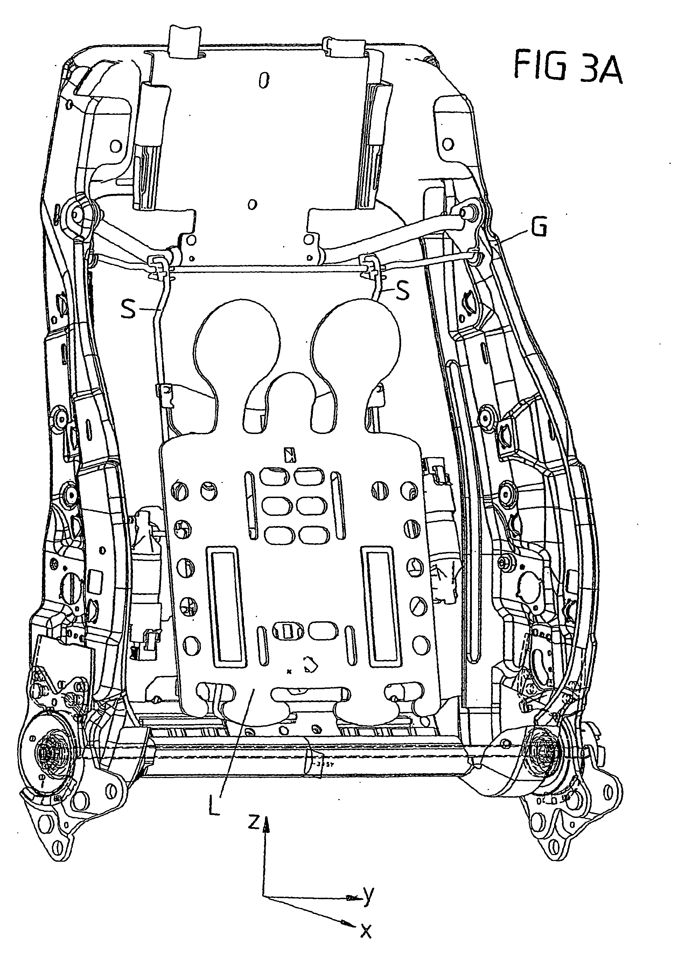

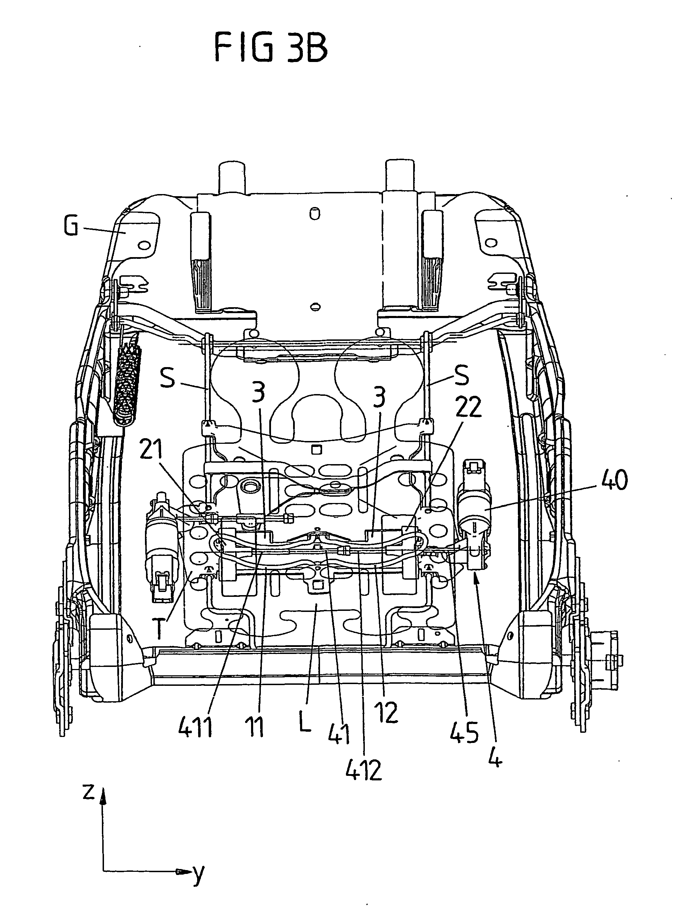

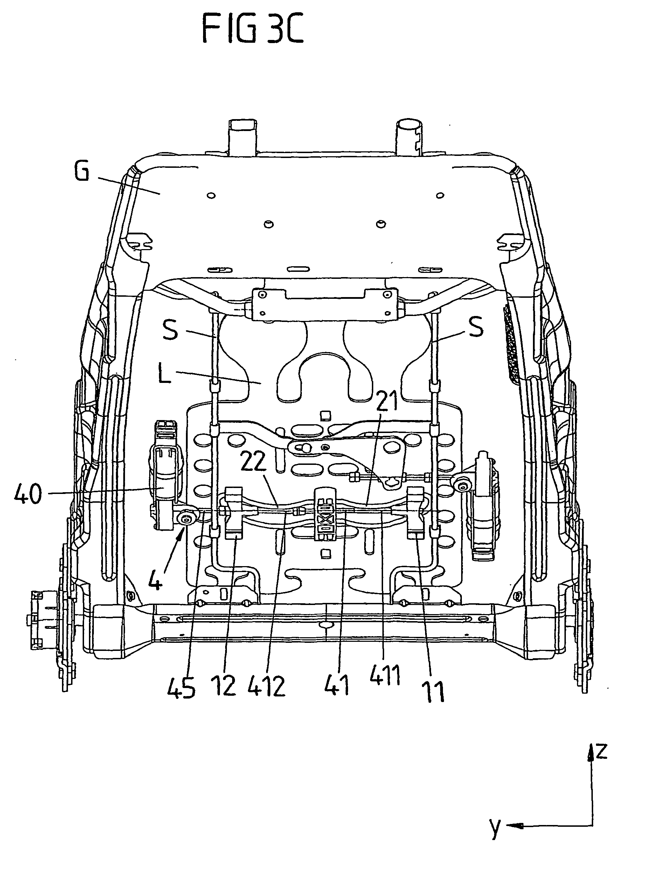

Anhand der Figuren 1a, 1b und 2 sowie der Figuren 3a bis 3c wird nachfolgend ein erstes Ausführungsbeispiel einer Lordosenstütze für eine Rückenlehne eines Kraftfahrzeugsitzes erläutert werden. Dabei zeigen die Figuren 1a und 1b die Verstelleinrichtung als solche; in Figur 2 ist die Verstelleinrichtung zusammen mit dem Lehnengestell einer Rückenlehne dargestellt; und die Figuren 3a bis 3c zeigen zusätzlich zu dem Lehnengestell und der Verstelleinrichtung auch die zu verstellende Lordosenstütze.

In den Figuren 2 und 3a bis 3c weist eine tragende Struktur einer Rückenlehne in Form eines Lehnengestells G zwei voneinander beabstandete, sich jeweils in Lehnenlängsrichtung z erstreckende Streben S auf, vor denen eine Lordosenstütze L angeordnet ist. Diese ist beispielsweise mittels in den Figuren nicht dargestellter Federelemente an dem Lehnengestell G gelagert.

Unter der Lehnenlängsrichtung z wird vorliegend diejenige Richtung verstanden, entlang der sich bei bestimmungsgemäßem Gebrauch der Rückenlehne an einem Kraftfahrzeugsitz die Wirbelsäule einer auf dem entsprechenden Fahrzeugsitz sitzenden Person erstreckt. Bei aufrechter Einstellung der Rückenlehne, d. h., wenn diese im Wesentlichen senkrecht vom Sitzpolster absteht, verläuft die Lehnenlängsrichtung z im Wesentlichen entlang der vertikalen Fahrzeugachse. Das Lehnengestell G sowie die Lordosenstütze L liegen dabei jeweils im Wesentlichen in einer Ebene, die durch die Lehnenlängsachse z sowie die senkrecht hierzu verlaufende horizontale Querachse y aufgespannt wird.

Im Folgenden geht es um die Einstellbarkeit der Lage bzw. Wölbung der Lordosenstütze L, welche hier als flexible Lordosenmatte ausgebildet ist, entlang einer Richtung x, die senkrecht zu der durch die Lehnenlängsachse z und der horizontalen Querachse y aufgespannten Ebene verläuft. Hierzu ist an den entlang der Lehnenlängsrichtung z verlaufenden Streben S des Lehnengestells G eine Verstelleinrichtung angebracht, die nachfolgend anhand einer Zusammenschau der Figuren 1a, 1b, 2 und 3a bis 3c erläutert werden wird.

Die Verstelleinrichtung ist auf einem Träger T in Form eines Trägerblechs angeordnet, welcher mittels geeigneter Fixierungsmittel an den in Lehnenlängsrichtung erstreckten Streben S befestigt wird. Der Träger T erstreckt sich dabei entlang der horizontalen Querrichtung y (also senkrecht zur Lehnenlängsrichtung z) von der einen Längsstrebe S zur anderen Längsstrebe S und weist etwa mittig Drehlager D auf, an denen zwei Stützbügel 11, 12 schwenkbar angelenkt sind.

Jeder der beiden Stützbügel 11, 12 erstreckt sich jeweils von seinen beiden schwenkbar an jeweils einem Drehlager D angelenkten Enden 11 a, 11 b bzw. 12a, 12b zu einem der beiden seitlichen Ränder des Trägers T. Als Lagerabschnitte 11 a, 11 b bzw. 12a, 12b der Stützbügel dienen dabei abgewinkelte Endabschnitte der im Wesentlichen U-förmigen Stützbügel 11, 12. Die U-förmigen Stützbügel 11, 12 sind nicht eben ausgebildet, sondern weisen vielmehr eine Krümmung auf, so dass sie jeweils eine Rampe mit variabler Krümmung definieren, die mit einem zugeordneten Gleiter 21, 22 einer Gleiteranordnung 2 zusammenwirkt.

Die beiden Gleiter 21, 22 sind an jeweils einer an dem Trägerblech T angeordneten bzw. ausgebildeten Führungsschiene 3 in Erstreckungsrichtung der Schenkel der U-förmigen Stützbügel 11, 12 geführt. Sie untergreifen dabei die beiden Stützbügel 11, 12 an deren gekrümmten Abschnitten 13, 14 und wirken mit diesen rampenartig nach dem Keilprinzip zusammen.

Die beiden Gleiter 11, 12 sind entlang der jeweils zugeordneten Führungsschiene 3 einander entgegengesetzt entlang der horizontalen Querrichtung y mittels eines Spindelantriebs 4 bewegbar. Der Spindelantrieb 4 umfasst einen Antriebsmotor 40, welcher eine Antriebswelle 45 antreibt. Diese ist wiederum drehfest mit einer Spindel 41 mit einem Zentrierelement 44 verbunden, welche zwei Gewindeabschnitte 411, 412 mit Gewinden entgegengesetzter Steigung aufweist, nämlich einen Gewindeabschnitt 411 mit einem linkssteigendem Gewinde und einen Gewindeabschnitt 412 mit einem rechtssteigendem Gewinde. Jeder der beiden Gewindeabschnitt 411, 412 wirkt mit einem zugeordneten Innengewinde 23, 24 zusammen, die in jeweils einem der beiden Gleiter 21, 22 ausgebildet ist. Das entsprechende Innengewinde 23, 24 kann dabei wahlweise durch jeweils eine Spindelmutter gebildet werden, die in je einem der beiden Gleiter 21, 22 angeordnet, insbesondere eingepresst ist, oder es kann in dem jeweiligen Gleiter 21 bzw. 22 einstückig herausgeformt sein.

Aufgrund der unterschiedlichen Steigung der beiden Gewindeabschnitte 411, 412 der Gewindespindel 4 werden bei einer Drehung der Gewindespindel 4, je nach deren Drehrichtung, die beiden Gleiter 21, 22 in einander entgegengesetzter Richtung entweder aufeinander zu bewegt (hin zur Mitte des Trägerblechs T) oder voneinander weg bewegt (jeweils hin zu einem seitlichen Rand des Trägerblechs T). Aufgrund des Zusammenwirkens der Gleiter 21, 22 mit dem jeweils zugeordneten gekrümmten, rampenartigen Abschnitt 13, 14 des einen bzw. anderen Stützbügels 11, 12 werden bei einem Verfahren der Gleiter 21, 22 aufeinander zu (zur Mitte des Trägerblechs T hin) die Stützbügel 11, 12 derart um ihr jeweiliges Drehlager D verschwenkt, dass sie auf die Lordosenstütze L einwirken und diese entlang der Richtung x senkrecht zu der durch die Lehnenlängsrichtung z und die horizontale Querrichtung y aufgespannte Ebene weg von dem Trägerblech T verstellen, wobei sich die Lage der Lordosenstütze L entlang jener Richtung x ändert und/oder die Lordosenstütze L in dieser Richtung gekrümmt wird - je nach dem, ob die Lagerung der Lordosenstütze L (in Form einer Lordosenmatte) am Sitzgestell G eine Verschiebung der Lordosenstütze L entlang der besagten Richtung x zulässt oder lediglich eine Krümmung. Werden die beiden Gleiter 21, 22 demgegenüber in entgegengesetzter Richtung jeweils in Richtung auf einen der beiden seitlichen Ränder des Trägerblechs T bewegt, so werden die Stützbügel 11, 12 in Richtung auf das Trägerblech T verklappt, so dass die Wölbung der Lordosenstütze L nachlässt bzw. die Lordosenstütze L sich wieder dichter an das Trägerblech T heranbewegt.

Im Ergebnis kann also durch Verschieben der Gleiter 21, 22 entlang einer Richtung y parallel zur Erstreckungsebene des Lehnengestells G mittels der Stützbügel 11, 12 eine Einstellung der Lage bzw. Wölbung der Lordosenstütze L entlang einer Richtung x senkrecht zur Erstreckungsebene (yz-Ebene) des Lehnengestells G vorgenommen werden. Dies ist darauf zurückzuführen, dass die Gleiter 21, 22 mit entsprechend gekrümmten Abschnitten 13, 14 der Stützbügel 11, 12 nach dem Keilprinzip zusammenwirken, so dass eine Bewegung der Gleiter 21, 22 entlang einer Richtung y parallel zur Erstreckungsebene (yz-Ebene) des Lehnengestells G in eine Bewegung der Stützbügel 11, 12 (nämlich in eine Schwenkbewegung um die Drehlager D der Stützbügel 11, 12) umgesetzt wird, welche eine Komponente in Richtung x senkrecht zur Erstreckungsebene des Lehnengestells aufweist.

Die Verstelleinrichtung 1, 2, 3, 4 zeichnet sich dabei durch eine geringe Bauhöhe entlang der Verstellrichtung x aus, so dass sie nur wenig Bauraum zwischen dem Lehnengestell G und der Lordosenstütze L erfordert. Ferner zeichnet sie sich durch einen einfachen Aufbau mit wenigen Bauteilen auf einem Trägerblech T verschiebbaren Gleiter 21, 22 mit zugeordneten Stützbügeln 11, 12) und gute Montierbarkeit aus.

Durch die symmetrische Anordnung der beiden Stützbügel 11,12 und der zugeordneten Gleiter 21, 22 bezüglich einer in Lehnenlängsrichtung z verlaufenden Symmetrieachse wird dabei eine symmetrische, gleichmäßige Wölbung bzw. Verstellung der Lordosenstütze L sichergestellt.

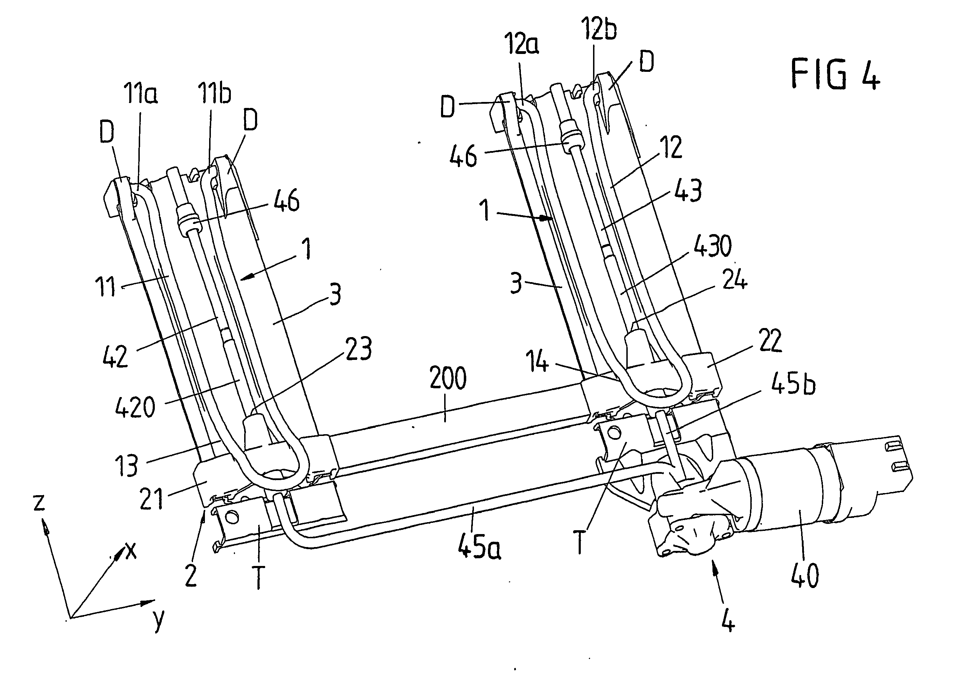

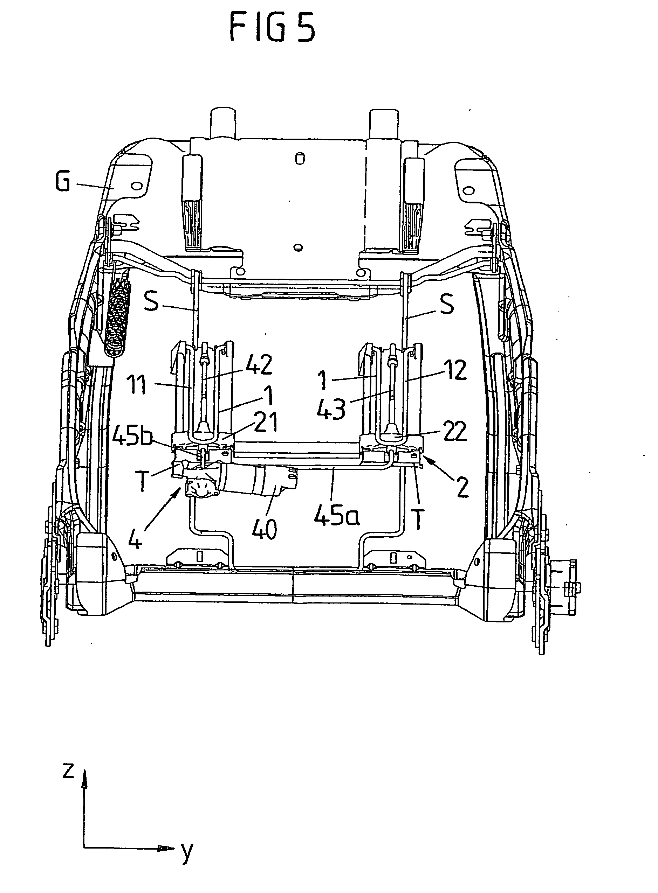

In den Figuren 4 und 5 ist eine Abwandlung des Ausführungsbeispiels aus den Figuren 1a bis 3c dargestellt, wobei der wesentliche Unterschied darin besteht, dass gemäß den Figuren 4 und 5 die Stützbügel 11, 12 sich jeweils entlang der Lehnenlängsrichtung z erstrecken und dabei entlang der horizontalen Querachse y voneinander beabstandet und parallel zueinander angeordnet sind. Jedem der beiden Stützbügel 11, 12 ist ein in Lehnenlängsrichtung z erstrecktes Trägerblech T zugeordnet, das ein Drehlager D für die abgewinkelten Endabschnitte 11a, 11b bzw. 12a, 12b des jeweiligen Stützbügels 11, 12 aufweist und ferner mit jeweils einer Führungsschiene 3 für einen dem jeweiligen Stützbügel 11, 12 zugeordneten und mittels eines Spindelantriebs 4 entlang der Lehnenlängsrichtung z verschieblichen Gleiter 21 bzw. 22 versehen ist.

Zum Verschieben der beiden Gleiter 21, 22 dient jeweils eine von zwei parallel zueinander angeordneten, in Lehnenlängsrichtung z erstreckten Spindeln 42, 43, die von jeweils einer von zwei flexiblen Antriebswelle 45a, 45b des Antriebsmotors 40 des Spindelantriebs 4 angetrieben wird und die jeweils über einen Gewindeabschnitt 420 bzw. 430 mit einem zugeordneten Innengewinde 23 bzw. 24 des jeweiligen Gleiters 21, 22 zusammenwirkt.

Beim Verfahren der Gleiter 21, 22 entlang der Lehnenlängsrichtung z mittels des Spindelantriebs 4, wobei die beiden über ein Verbindungselement 200 miteinander verbundenen Gleiter 21, 22 gemeinsam bewegt werden, wirken diese wiederum keilartig mit einem gekrümmten Abschnitt 13, 14 des jeweiligen Stützbügels 11, 12 zusammen, so dass die Stützbügel 11, 12 - je nach Bewegungsrichtung der Gleiter 21, 22 - entlang der einen oder anderen Richtung um ihr jeweiliges Drehlager D verschwenkt werden. Bei einer Schwenkbewegung der Stützbügel 11, 12 weg von dem jeweiligen Trägerblech T und hin zu der vor der Verstelleinrichtung 1, 2, 3, 4 angeordneten Lordosenstütze L (entsprechend einer Bewegung der Gleiter 21, 22 hin zu den der Lagerung dienenden Endabschnitten 11a, 11b; 12a, 12b der Stützbügel 11, 12) wird die Lordosenstütze L entlang der Richtung x senkrecht zur Erstreckungsebene des Lehnengestells (y-z-Ebene) bewegt und/oder gewölbt. Bei einer Schwenkbewegung der Stützbügel 11,12 entlang der entgegengesetzten Richtung (entsprechend einer Bewegung der Gleiter 21, 22 hin zu den freien Enden der Stützbügel 11, 12) lässt die Wölbung der Lordosenstütze L nach bzw. bewegt sich diese auf den Träger T der Verstelleinrichtung 1, 2, 3, 4 zu.

Die Befestigung der Verstelleinrichtung 1, 2, 3, 4 am Lehnengestell erfolgt auch hier wieder über die Trägerbleche T.

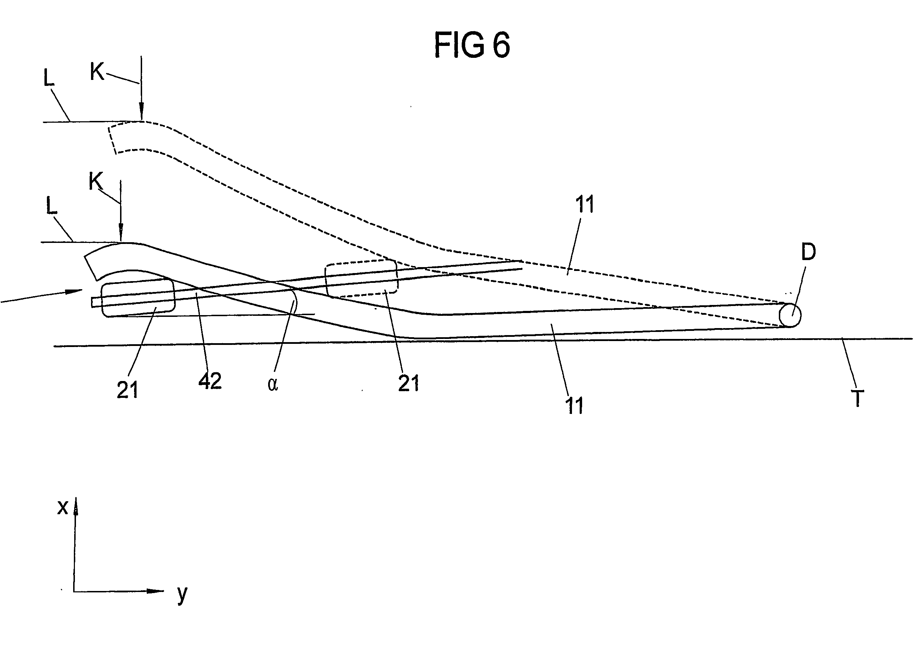

Gemäß einer Weiterbildung der anhand der Figuren 1a bis 5 beschriebenen Verstelleinrichtungen werden die jeweiligen Gleiter 21, 22 nicht parallel zu der Gestellebene (yz-Ebene) verschoben, sondern vielmehr entlang einer Richtung mit einer Komponente entlang der Verstellrichtung x der Lordosenstütze L, wie in Figur 6 schematisch dargestellt.

Konkret zeigt Figur 6 eine Weiterbildung der Verstelleinrichtung aus Figur 4 in zwei unterschiedlichen Verstellpositionen des mittels einer Spindel 42 geführten Gleiters 21, entsprechend zwei unterschiedlichen Schwenkpositionen des Stützbügels 11, die sich entsprechend auf die Lage der Lordosenstütze L auswirken, auf die ja der Stützbügel 11 einwirkt. Der wesentliche Unterschied zu der Verstelleinrichtung 1, 2, 3, 4 aus Figur 4 besteht dabei darin, dass die Spindel 42 (und damit auch die in Figur 6 der Übersichtlichkeit halber nicht mit dargestellte Führungsschiene 3), die den Gleiter 21 bewegt und führt, um einen Winkel bezüglich der Erstreckungsebene des Lehnengestells G (yz-Ebene) geneigt ist, also eine Komponente entlang der Verstellrichtung x der Lordosenstütze L aufweist. Hierdurch kann bei einem vorgegebenen Verstellweg des jeweiligen Gleiters 21 ein stärkeres Anheben des jeweiligen Stützbügels 11 und somit eine stärkere Verschiebung bzw. Wölbung der Lordosenstütze L erreicht werden, was in der Wirkung einer Übersetzung entspricht.

Außerdem ist anhand der in Figur 6 eingezeichneten Kraftpfeile K, die die Kraftwirkung auf den Stützbügel 11 beim Anlehnen eines Fahrzeuginsassen an die Lordosenstütze L wiedergeben, erkennbar, dass durch den geneigten Verlauf der Spindel 42 und damit eine entsprechende Verschiebung des Gleiters 21 kürzere Hebel am Stützbügel 11 wirken, entsprechend einer geringeren Drehmomentbelastung des Stützbügels 11.

An der Stelle, an der bei den vorherigen Ausführungsbeispielen der jeweilige Stützbügel 21 mit der Lordosenstütze L zusammenwirkt, können spezielle Stützbereiche, z. B. aus Kunststoff bestehend, an dem Stützbügel 11 angeordnet, z. B. angeklippst sein, um das Zusammenwirken von Stützbügel und Lordosenstütze zu optimieren.

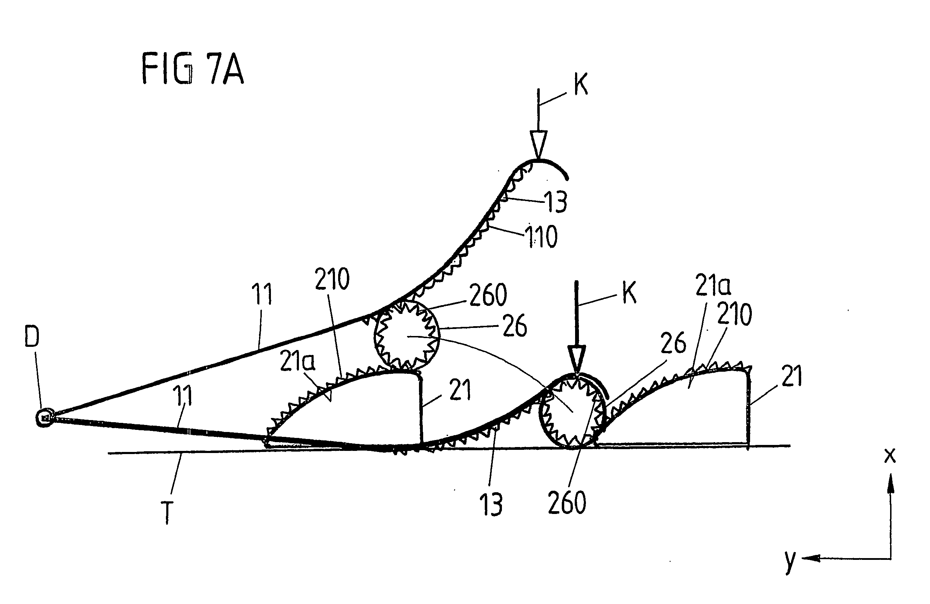

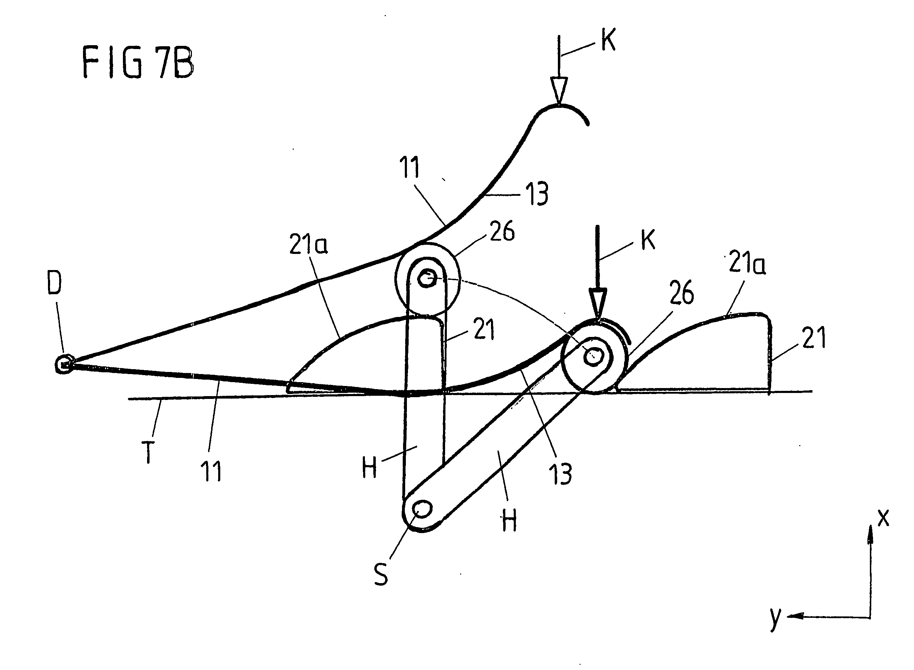

In den Figuren 7a und 7b ist schematisch eine andere Weiterbildung der Verstelleinrichtungen aus den Figuren 1a bis 5 schematisch dargestellt, wobei die Figuren 7a und 7b unterschiedliche Ausführungsformen der entsprechend weitergebildeten Verstelleinrichtung darstellen. Gemeinsam ist beiden Ausführungsformen, dass der jeweilige entlang der horizontalen Querachse y oder entlang der Lehnenlängsrichtung z bewegliche Gleiter 21 (je nach dem, ob von einer Verstelleinrichtung gemäß den Figuren 1a bis 3c oder einer Verstelleinrichtung gemäß den Figuren 4 und 5 ausgegangen wird) rampenartig ausgebildet ist und eine gekrümmte Lauffläche 21 a für einen zugeordneten Rollkörper 26 aufweist. Dieser Rollkörper 26 rollt auf der zugeordneten gekrümmten Lauffläche 21 a des Gleiters 21 ab, wenn sich der Gleiter entlang der horizontalen Querrichtung y bzw. der Lehnenlängsrichtung z bewegt und wirkt hierbei auf einen gekrümmten Abschnitt 13 des dem Gleiter 21 zugeordneten Stützbügels 11 ein, um diesen anzuheben oder abzusenken, je nach dem, ob der Gleiter 21 hin zu dem Drehlager D des Stützbügels 11 oder weg von dem Drehlager D des Stützbügels 11 bewegt wird.

Bei dem Ausführungsbeispiel gemäß Figur 7a ist der Rollkörper 26 mit einer Außenverzahnung 260 versehen, über die er einerseits mit einer zugeordneten Verzahnung 210 der Lauffläche 21 a des Gleiters 21 und andererseits mit einer zugeordneten Verzahnung 110 an der gekrümmten Oberfläche 13 des Stützbügels 11 zusammenwirkt. Hierdurch wird der Rollkörper 26 bei seiner Bewegung entlang der Lauffläche 21 a des Gleiters 210 zwangsgeführt, wenn sich der Gleiter entlang der horizontalen Querachse y bzw. entlang der Lehnenlängsrichtung z bewegt.

Die Bewegung des Rollkörpers 26 ist dabei derart, dass er die Tendenz hat, die Wirkung des Gleiters 21 auf den Stützbügel 11 zu verstärken, also bei einer Annäherung des Gleiters 21 an das Drehlager D das Anheben bzw. Verschwenken des Stützbügels 11 von dem Träger T noch zu verstärken, entsprechend der Wirkung einer Übersetzung.

Bei dem in Figur 7b dargestellten Ausführungsbeispiel hat der jeweilige Rollkörper 26 dieselbe Funktion wie bei dem zuvor anhand Figur 7a erläuterten Ausführungsbeispiel; der Unterschied besteht lediglich in der Führung des Rollkörpers 26. Bei dem in Figur 7b dargestellten Ausführungsbeispiel ist der Rollkörper 26 über einen schwenkbaren Hebel H schwenkbar an einer am Träger T vorgesehenen Schwenkachse S angelenkt. Hierdurch wird die Bewegung des Rollkörpers 26 entlang der zugeordneten Lauffläche 21a des Gleiters 2 durch den Hebel H gesteuert, so dass auch hier - wie bei dem Ausführungsbeispiel gemäß Figur 7a - jeder Position des Gleiters 21 entlang der horizontalen Querachse y bzw. entlang der Lehnenlängsrichtung z eine definierte Position des Rollkörpers 26 auf der zugeordneten Lauffläche 21 a des Gleiters 21 zugeordnet ist.

Die in den Figuren 7a und 7b dargestellte Weiterbildung der Verstelleinrichtung für eine Lordosenstütze hat den Vorteil, dass der Rollkörper 26, über den der jeweilige Gleiter 21 mit dem zugeordneten Stützbügel 11 in Wirkverbindung steht, als ein Übersetzungsglied wirkt, welches für einen gegebenen Verstellweg des Gleiters 21 entlang der horizontalen Querachse y oder der Lehnenlängsrichtung z die entsprechende Schwenkbewegung des Stützbügels (mit einer Komponente entlang der Richtung x senkrecht zur Erstreckungsebene des Lehnengestells) verstärkt. Hierdurch kann die Bauhöhe der gesamten Anordnung in Verstellrichtung x der Lordosenstütze nochmals reduziert werden.

Zudem kommt es zu einer deutlichen Reduzierung der Reibung, da der Gleiter nun über einen Rollkörper 26 mit minimierter Reibung mit dem zugeordneten Stützbügel 11 zusammenwirkt und ein signifikanter Beitrag zur Gleitreibung nur noch vom Zusammenwirken des jeweiligen Gleiters 21 mit der zugeordneten Führungsschiene (3) herrührt.

In jedem Fall ist dabei durch die Verwendung von Mitteln zur definierten Führung des jeweiligen Rollkörpers 26 entlang der Lauffläche 21 a des zugeordneten Gleiters 21, z. B. in Form eines Hebels H oder einer Verzahnung 210, sichergestellt, dass der Rollkörper bei einer Bewegung des Gleiters definiert mitgenommen wird.

## Patentansprüche

1. Rückenlehnenstruktur für einen Kraftfahrzeugsitz mit
- einem Lehnengestell (G), dass eine dem Rücken eines Sitzbenutzers zugewandte Vorderseite aufweist,
- einer an der Vorderseite des Lehnengestells angeordneten Lordosenstütze (L) zum Abstützen des Rückens eines Sitzbenutzers und
- einer Verstelleinrichtung zur Einstellung der Lage der Lordosenstütze (L) senkrecht zur Erstreckungsebene des Lehnengestells,
**dadurch gekennzeichnet,**
**dass** die Verstelleinrichtung zwei mit der Lordosenstütze (L) in Wirkverbindung stehende Verstellelemente (11, 12) und zwei jeweils bezüglich eines Verstellelementes (11; 12) bewegbare Gleiter (21, 22) umfasst, die derart zusammenwirken, dass bei Bewegung eines Gleiters (21; 22) jeweils ein zugeordnetes Verstellelement (11, 12) mit einer Richtungskomponente (x) senkrecht zur Bewegungsrichtung (y, z) des Gleiters (21, 22) verstellt wird und hierbei in dieser Richtung (x) auf die Lordosenstütze (L) einwirkt, und dass an dem jeweiligen Verstellelement (11; 12) oder an dem jeweiligen Gleiter (21; 22) mindestens ein rampenartiger Abschnitt (13, 14) vorgesehen ist, über den das Verstellelement (11; 12) nach dem Keilprinzip mit dem zugeordneten Gleiter (21; 22) zusammenwirkt, wobei das jeweilige Verstellelement (11, 12) schwenkbar gelagert ist, so dass es unter Einwirkung eines zugeordneten Gleiters (21, 22) verschwenkt wird und hierbei eine Bewegungskomponente (x) senkrecht zur Bewegungsrichtung (y, z) des Gleiters (21, 22) aufweist.

2. Rückenlehnenstruktur nach Anspruch 1, **dadurch gekennzeichnet, dass** die Gleiter (21, 22) im Wesentlichen parallel zu der durch das Lehnengestell (G) aufgespannten Ebene verschiebbar sind.

3. Rückenlehnenstruktur nach Anspruch 1 oder 2, **dadurch gekennzeichnet, dass** die Gleiter (21, 22) mit einer Richtungskomponente (x) senkrecht zu der durch das Lehnengestell (G) aufgespannten Ebene verschiebbarsind.

4. Rückenlehnenstruktur nach einem der vorhergehenden Ansprüche, **dadurch gekennzeichnet, dass** die Gleiter (21, 22) entlang der Lehnenlängsrichtung (z) bewegbar sind, entlang der sich bei bestimmungsgemäßem Gebrauch der Rückenlehnenstruktur die Wirbelsäule eines Sitzbenutzers erstreckt.

5. Rückenlehnenstruktur nach einem der Ansprüche 1 bis 3, **dadurch gekennzeichnet, dass** die Gleiter entlang einer Richtung (y) bewegbar sind, die im Wesentlichen senkrecht zu der Lehnenlängsrichtung (z) verläuft, entlang der sich bei bestimmungsgemäßem Gebrauch der Rückenlehnenstruktur die Wirbelsäule eines Sitzbenutzers erstreckt.

6. Rückenlehnenstruktur nach einem der vorhergehenden Ansprüche, **dadurch gekennzeichnet, dass** die Gleiter (21, 22) mittels einer Führungsschiene (3) geführt sind.

7. Rückenlehnenstruktur nach einem der vorhergehenden Ansprüche, **dadurch gekennzeichnet, dass** den Gleitern (21, 22) ein Antrieb (4) zugeordnet ist, mittels dem die Gleiter (21, 22) bewegbar sind.

8. Rückenlehnenstruktur nach Anspruch 7, **dadurch gekennzeichnet, dass** dem Antrieb (4) ein Antriebsmotor (40) zugeordnet ist, dessen Ausgang durch mindestens eine starre oder eine flexible Welle (41, 42, 43) gebildet wird.

9. Rückenlehnenstruktur nach Anspruch 7 oder 8, **dadurch gekennzeichnet, dass** der Antrieb (4) als Spindelantrieb oder als Hebelantrieb ausgebildet ist.

10. Rückenlehnenstruktur nach einem der Ansprüche 7 bis 9, **dadurch gekennzeichnet, dass** ein Antriebsmotor (40) zur Betätigung der beiden Gleiter (21, 22) dient.

11. Rückenlehnenstruktur nach einem der vorhergehenden Ansprüche, **dadurch gekennzeichnet, dass** die beiden Gleiter (21, 22) in zueinander entgegengesetzten Richtungen bewegbar sind.

12. Rückenlehnenstruktur nach Anspruch 11, **dadurch gekennzeichnet, dass** die beiden Gleiter (21, 22) jeweils entlang einer Richtung (y) bewegbar sind, die quer zur Lehnenlängsrichtung (z) verläuft.

13. Rückenlehnenstruktur nach Anspruch 9, Anspruch 10 und Anspruch 11 oder 12, **dadurch gekennzeichnet, dass** die beiden Gleiter (21, 22) durch zwei Gewindeabschnitte (411, 412) einer Spindel (41) mit entgegengesetzter Gewindesteigung bewegbar sind.

14. Rückenlehnenstruktur nach einem der vorhergehenden Ansprüche, **dadurch gekennzeichnet, dass** die beiden Gleiter (21, 22) parallel zueinander bewegbar sind und senkrecht zu der Bewegungsrichtung (z) voneinander beabstandet sind.

15. Rückenlehnenstruktur nach Anspruch 14, **dadurch gekennzeichnet, dass** die beiden Gleiter (21, 22) entlang der Lehnenlängsrichtung (z) bewegbar sind.

16. Rückenlehnenstruktur nach Anspruch 9, Anspruch 10 und Anspruch 14 oder 15, **dadurch gekennzeichnet, dass** die beiden Gleiter (21, 22) mittels eines Antriebsmotors (40) bewegbar sind, wobei mindestens einer der Gleiter (21, 22) mittels einer flexiblen Welle (45a, 45b) mit dem Antriebsmotor (40) gekoppelt ist.

17. Rückenlehnenstruktur nach einem der vorhergehenden Ansprüche, **dadurch gekennzeichnet, dass** an dem jeweiligen Verstellelement (11; 12) oder an dem jeweiligen Gleiter (21; 22) eine gekrümmte rampenartige Oberfläche vorgesehen ist, über die das Verstellelement (11, 12) nach dem Keilprinzip mit dem zugeordneten Gleiter (21, 22) zusammenwirkt.

18. Rückenlehnenstruktur nach einem der vorhergehenden Ansprüche, **dadurch gekennzeichnet, dass** das mindestens eine Verstellelement (11, 12) als Stützbügel ausgebildet ist.

19. Rückenlehnenstruktur nach einem der vorhergehenden Ansprüche, **dadurch gekennzeichnet, dass** die Gleiter (21, 22) über ein rotationssymmetrisches Element (26) mit dem zugeordneten Verstellelement (11, 12) zusammenwirken, wobei das rotationssymmetrische Element (26) bei einer Bewegung der Gleiter (21, 22) entlang einer Lauffläche (21 a) der Gleiter (21, 22) abrollen.

20. Rückenlehnenstruktur nach einem der vorhergehenden Ansprüche, **dadurch gekennzeichnet, dass** die Lauffläche (21a) der Gleiter (21, 22), insbesondere in Form einer gekrümmten Lauffläche, schräg zur Bewegungsrichtung (y, z) der Gleiter (21, 22) verläuft.

21. Rückenlehnenstruktur nach Anspruch 19, **dadurch gekennzeichnet, dass** Führungsmittel (110, 210, 260; H), zur Führung des rotationssymmetrischen Elementes (26) entlang der Lauffläche (21 a) vorgesehen sind.

22. Rückenlehnenstruktur nach Anspruch 21, **dadurch gekennzeichnet, dass** zur Führung des rotationssymmetrischen Elementes (26) eine Hebelanordnung (H) vorgesehen ist.

23. Rückenlehnenstruktur nach Anspruch 21, **dadurch gekennzeichnet, dass** zur Führung des rotationssymmetrischen Elementes (26) miteinander zusammenwirkende Verzahnungsbereiche (110, 210, 260) des Gleiters (21) und des rotationssymmetrischen Elementes (26) sowie vorzugsweise zusätzlich des Verstellelementes (11) vorgesehen sind.

24. Rückenlehnenstruktur nach einem der Ansprüche 19 oder 21 bis 23, **dadurch gekennzeichnet, dass** das rotationssymmetrische Element (26) durch einen Rollkörper gebildet wird.

25. Rückenlehnenstruktur nach einem der vorhergehenden Ansprüche, **dadurch gekennzeichnet, dass** sich das jeweilige Verstellelement (11, 12) entlang der Bewegungsrichtung (y, z) des zugeordneten Gleiters (21, 22) erstreckt.

## Claims

1. Backrest structure for a motor vehicle seat with
- a backrest frame (G) which has a front side facing the back of a seat user,
- a lordosis support (L) mounted on the front side of the backrest frame for supporting the back of a seat user, and
- an adjusting device for adjusting the position of the lordosis support (L) perpendicular to the extension plane of the backrest frame
**characterised in that**
the adjusting device comprises two adjusting elements (11, 12) in operative connection with the lordosis support (L) and two sliders (21, 22) being respectively movable relative to an adjusting element (11; 12) wherein these interact with one another so that upon a movement of a slider (21; 22) the associated adjusting element (11, 12) is respectively adjusted with a direction component (x) perpendicular to the direction of movement (y, z) of the slider (21, 22) and here acts in this direction (x) on the lordosis support (L), and that on the respective adjusting element (11; 12) or on the respective slider (21; 22) there is at least one ramp-type section (13, 14) through which the adjusting element (11; 12) interacts with the associated slider (21; 22) on the basis of the wedge principle, wherein the respective adjusting element (11, 12) is swivel mounted so that it is pivoted under the action of an associated slider (21, 22) and here has a motion component (x) perpendicular to the direction of movement (y, z) of the slider (21, 22).

2. Backrest structure according to claim 1, **characterised in that** the at least one slider (21, 22) is displaceable substantially parallel to the plane spanned by the backrest frame (G).

3. Backrest structure according to claim 1 or 2, **characterised in that** the at least one slider (21, 22) is displaceable with a direction component (x) perpendicular to the plane spanned by the backrest frame (G).

4. Backrest structure according to one of the preceding claims, **characterised in that** the sliders (21, 22) are movable along the backrest longitudinal direction (z) along which the spinal column of a seat user extends when the backrest structure is used as intended.

5. Backrest structure according to one of claims 1 to 3, **characterised in that** the sliders are movable along a direction (y) which runs substantially perpendicular to the backrest longitudinal direction (z) along which the spinal column of a seat user extends when the backrest structure is used as intended.

6. Backrest structure according to one of the preceding claims, **characterised in that** the sliders (21, 22) are guided by means of a guide rail (3).

7. Backrest structure according to one of the preceding claims, **characterised in that** the sliders (21, 22) are assigned a drive (4) by means of which the sliders (21, 22) are movable.

8. Backrest structure according to claim 7, **characterised in that** the drive (4) is assigned a drive motor (40) whose output is formed by at least one rigid or flexible shaft (41, 42, 43).

9. Backrest structure according to claim 7 or 8, **characterised in that** the drive (4) is designed as a spindle drive or as a lever drive.

10. Backrest structure according to one of claims 7 to 9, **characterised in that** a drive motor (40) serves to actuate both sliders (21, 22).

11. Backrest structure according to one of the preceding claims, **characterised in that** the two sliders (21, 22) are movable in opposite directions relative to each other.

12. Backrest structure according to claim 11, **characterised in that** the two sliders (21, 22) are each movable along a direction (y) which runs transversely to the backrest longitudinal direction (z).

13. Backrest structure according to claim 9, claim 10, and claim 11 or 12, **characterised in that** the two sliders (21, 22) are movable by two threaded sections (411, 412) of a spindle (41) with opposite thread pitch.

14. Backrest structure according to one of the preceding claims, **characterised in that** the two sliders (21, 22) are movable parallel to each other and are spaced from each other perpendicular to the direction of movement (z).

15. Backrest structure according to claim 14, **characterised in that** the two sliders (21, 22) are movable along the backrest longitudinal direction (z).

16. Backrest structure according to claim 9, claim 10 and claim 14 or 15, **characterised in that** the two sliders (21, 22) are movable by means of a drive motor (40) whereby at least one of the sliders (21, 22) is coupled by means of a flexible shaft (45a, 45b) to the drive motor (40).

17. Backrest structure according to one of the preceding claims, **characterised in that** on the respective adjusting element (11; 12) or on the respective slider (21; 22) there is a curved ramp type surface through which the adjusting element (11, 12) interacts with the associated slider (21, 22) on the basis of the wedge principle.

18. Backrest structure according to one of the preceding claims, **characterised in that** the at least one adjusting element (11, 12) is designed as a supporting yoke.

19. Backrest structure according to one of the preceding claims, **characterised in that** the sliders (21, 22) interact with the associated adjusting element (11, 12) through a rotationally symmetrical element (26) whereby the rotationally symmetrical element (26) during movement of the slider (21, 22) rolls down along a track face (21 a) of the slider (21, 22).

20. Backrest structure according to one of the preceding claims, **characterised in that** the track face (21 a) of the sliders (21, 22) runs more particularly in the form of a curved track face inclined to the direction of movement (y, z) of the slider (21, 22).

21. Backrest structure according to claim 19, **characterised in that** guide means (110, 210, 260; H) are provided for guiding the rotationally symmetrical element (26) along the track face (21 a).

22. Backrest structure according to claim 21, **characterised in that** a lever arrangement (H) is provided to guide the rotationally symmetrical element (26).

23. Backrest structure according to claim 21, **characterised in that** to guide the rotationally symmetrical element (26) there are interacting toothed regions (110, 210, 260) of the slider (21) and of the rotationally symmetrical element (26) as well as preferably additionally of the adjusting element (11).

24. Backrest structure according to one of the claims 19 or 21 to 23, **characterised in that** the rotationally symmetrical element (26) is formed by a rolling body.

25. Backrest structure according to one of the preceding claims, **characterised in that** the respective adjusting element (11, 12) extends along the direction of movement (y, z) of the associated slider (21, 22).

## Revendications

1. Structure de dossier pour un siège de véhicule automobile, comprenant
- un châssis de dossier (G) qui comporte une face antérieure tournée vers le dos d'un utilisateur du siège,
- un soutien lombaire (L), agencé sur la face antérieure du châssis de dossier pour soutenir le dos d'un utilisateur du siège, et
- un moyen de réglage pour régler la situation du soutien lombaire (L) perpendiculairement au plan d'extension du châssis de dossier, **caractérisée en ce que**
le moyen de réglage comprend deux éléments de réglage (11, 12) qui sont en liaison de coopération avec le soutien lombaire (L) et deux coulisseaux (21, 22) déplaçables respectivement par rapport à un élément de réglage (11 ; 12), lesquels coopèrent de telle façon que lors d'un mouvement d'un coulisseau (21 ; 22) un élément de réglage associé (11, 12) est réglé respectivement avec une composante directionnelle (x) perpendiculaire à la direction de déplacement (y, z) du coulisseau (21, 22), et agit ici dans cette direction (x) sur le soutien lombaire (L), et **en ce qu'**il est prévu sur l'élément de réglage respectif (11 ; 12) ou sur le coulisseau respectif (21, 22) au moins un tronçon (13, 14) analogue à une rampe, via lequel l'élément de réglage (11, 12) coopère suivant le principe du coin avec le coulisseau associé (21 ; 22), et l'élément de réglage respectif (11, 12) est monté pivotant, de sorte qu'il est pivoté sous l'action d'un coulisseau associé (21, 22) et présente ici une composante de déplacement (x) perpendiculaire à la direction de déplacement (y, z) du coulisseau (21, 22).

2. Structure de dossier selon la revendication 1, **caractérisée en ce que** les coulisseaux (21, 22) sont capables de translation essentiellement parallèlement au plan défini par le châssis de dossier (G).

3. Structure de dossier selon la revendication 1 ou 2, **caractérisée en ce que** les coulisseaux (21, 22) sont capables de translation avec une composante directionnelle (x) perpendiculaire au plan défini par le châssis de dossier (G).

4. Structure de dossier selon l'une des revendications précédentes, **caractérisée en ce que** les coulisseaux (21, 22) sont déplaçables le long de la direction longitudinale (z) du dossier, le long de laquelle s'étend la colonne vertébrale d'un utilisateur du siège, lors d'une utilisation de la structure de dossier conforme à sa destination.

5. Structure de dossier selon l'une des revendications 1 à 3, **caractérisée en ce que** les coulisseaux sont déplaçables le long d'une direction (y) qui s'étend essentiellement perpendiculairement à la direction longitudinale du dossier (z), le long de laquelle s'étend la colonne vertébrale d'un utilisateur du siège lors d'une utilisation de la structure de dossier conforme à sa destination.

6. Structure de dossier selon l'une des revendications précédentes, **caractérisée en ce que** les coulisseaux (21, 22) sont guidés au moyen d'un rail de guidage (3).

7. Structure de dossier selon l'une des revendications précédentes, **caractérisée en ce qu'**un entraînement (4) est associé aux coulisseaux (21, 22), au moyen duquel les coulisseaux (21, 22) sont déplaçables.

8. Structure de dossier selon la revendication 7, **caractérisée en ce qu'**un moteur d'entraînement (40) est associé à l'entraînement (4), moteur dont la sortie est formée par au moins un arbre rigide ou flexible (41, 42, 43).

9. Structure de dossier selon la revendication 7 ou 8, **caractérisée en ce que** l'entraînement (4) est réalisé sous forme d'un entraînement à broche ou d'un entraînement à levier.

10. Structure de dossier selon l'une des revendications 7 à 9, **caractérisée en ce qu'**un moteur d'entraînement (40) sert à l'actionnement des deux coulisseaux (21, 22).

11. Structure de dossier selon l'une des revendications précédentes, **caractérisée en ce que** les deux coulisseaux (21, 22) sont déplaçables dans des directions mutuellement opposées.

12. Structure de dossier selon la revendication 11, **caractérisée en ce que** les deux coulisseaux (21, 22) sont respectivement déplaçables le long d'une direction (y) qui s'étend perpendiculairement à la direction longitudinale (z) du dossier.

13. Structure de dossier selon la revendication 9, la revendication 10 et la revendication 11 ou 12, **caractérisée en ce que** les deux coulisseaux (21, 22) sont déplaçables par deux tronçons à pas de vis (411, 412) d'une broche (41) avec des pas de vis en sens opposés.

14. Structure de dossier selon l'une des revendications précédentes, **caractérisée en ce que** les deux coulisseaux (21, 22) sont déplaçables parallèlement l'un à l'autre et sont écartés l'un de l'autre perpendiculairement à la direction de déplacement (z).

15. Structure de dossier selon la revendication 14, **caractérisée en ce que** les deux coulisseaux (21, 22) sont déplaçables le long de la direction longitudinale (z) du dossier.

16. Structure de dossier selon la revendication 9, la revendication 10 et la revendication 14 ou 15, **caractérisée en ce que** les deux coulisseaux (21, 22) sont déplaçables au moyen d'un moteur d'entraînement (40), et l'un au moins des coulisseaux (21, 22) est accouplé au moteur d'entraînement (40) au moyen d'un arbre flexible (45a, 45b).

17. Structure de dossier selon l'une des revendications précédentes, **caractérisée en ce qu'**il est prévu une surface incurvée analogue à une rampe sur l'élément de réglage respectif (11 ; 12) ou sur le coulisseau respectif (21 ; 22), via laquelle l'élément de réglage (11, 12) coopère suivant le principe du coin avec le coulisseau associé (21, 22).

18. Structure de dossier selon l'une des revendications précédentes, **caractérisée en ce que** ledit au moins un élément de réglage (11, 12) est réalisé sous forme d'arceau de soutien.

19. Structure de dossier selon l'une des revendications précédentes, **caractérisée en ce que** les coulisseaux (21, 22) coopèrent avec l'élément de réglage associé (11, 12) via un élément à symétrie de révolution (26), ledit élément à symétrie de révolution (26) roulant le long d'une surface de roulement (21a) des coulisseaux (21, 22) lors d'un mouvement des coulisseaux (21, 22).

20. Structure de dossier selon l'une des revendications précédentes, **caractérisée en ce que** la surface de roulement (21a) des coulisseaux (21, 22), en particulier sous la forme d'une surface de roulement incurvée, s'étend en oblique par rapport à la direction de mouvement (y, z) des coulisseaux (21, 22).

21. Structure de dossier selon la revendication 19, **caractérisée en ce qu'**il est prévu des moyens de guidage (110, 210, 260 ; H) pour le guidage de l'élément à symétrie de révolution (26) le long de la surface de roulement (21a).

22. Structure de dossier selon la revendication 21, **caractérisée en ce qu'**il est prévu un agencement à levier (H) pour le guidage de l'élément à symétrie de révolution (26).

23. Structure de dossier selon la revendication 21, **caractérisée en ce qu'**il est prévu des zones dentées (110, 210, 260) en coopération mutuelle sur le coulisseau (21) et sur l'élément à symétrie de révolution (26) et de préférence additionnellement sur l'élément de réglage (11) pour le guidage de l'élément à symétrie de révolution (26).

24. Structure de dossier selon l'une des revendications 19 ou 21 à 23, **caractérisée en ce que** l'élément à symétrie de révolution (26) est formé par un corps de roulement.

25. Structure de dossier selon l'une des revendications précédentes, **caractérisée en ce que** l'élément de réglage respectif (11, 12) s'étend le long de la direction de mouvement (y, z) du coulisseau associé (21, 22).
